(19) Europäisches Patentamt
European Patent Office
Office européen des brevets

(11) **EP 4 686 278 A1**

(12) **EUROPEAN PATENT APPLICATION**
published in accordance with Art. 153(4) EPC

(43) Date of publication:
**28.01.2026   Bulletin 2026/05**

(21) Application number: **24807621.8**

(22) Date of filing: **04.03.2024**

(51) International Patent Classification (IPC):
*H04W 64/00* (2009.01)     *G01S 19/43* (2010.01)
*H04W 24/08* (2009.01)     *H04W 72/25* (2023.01)
*H04L 5/00* (2006.01)      *H04W 92/18* (2009.01)

(52) Cooperative Patent Classification (CPC):
**G01S 19/43; H04L 5/00; H04W 24/08; H04W 64/00; H04W 72/25; H04W 92/18**

(86) International application number:
**PCT/KR2024/095467**

(87) International publication number:
**WO 2024/237751 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.05.2023   KR 20230061887**

(71) Applicant: **Samsung Electronics Co., Ltd.
Suwon-si, Gyeonggi-do 16677 (KR)**

(72) Inventors:
• **SHIN, Cheolkyu**
  Suwon-si Gyeonggi-do 16677 (KR)
• **RYU, Hyunseok**
  Suwon-si Gyeonggi-do 16677 (KR)
• **PARK, Kyoungmin**
  Suwon-si Gyeonggi-do 16677 (KR)
• **JANG, Youngrok**
  Suwon-si Gyeonggi-do 16677 (KR)

(74) Representative: **Gulde & Partner
Patent- und Rechtsanwaltskanzlei mbB
Berliner Freiheit 2
10785 Berlin (DE)**

(54) **METHOD AND APPARATUS FOR SUPPORTING POSITIONING IN WIRELESS COMMUNICATION SYSTEM**

(57)     The present disclosure provides a method and an apparatus for supporting positioning in a wireless communication system. A user equipment (UE) according to an embodiment of the present disclosure may be configured to: receive information associated with carrier phase positioning (CPP) from a location management function (LMF) entity; receive a positioning reference signal (PRS) over a plurality of resources; measure a carrier phase on the basis of the center frequency of a frequency band associated with the plurality of resources; and transmit a measurement report on the carrier phase to the LMF entity.

FIG.3

EP 4 686 278 A1

## Description

[Technical Field]

The disclosure relates to a wireless mobile communication system and, more specifically, to a method and an apparatus for supporting positioning in a wireless communication system.

[Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

[Disclosure of Invention]

[Technical Problem]

The disclosure relates to a wireless mobile communication system and, more specifically, to a method and an apparatus for supporting positioning in a wireless communication system. Specifically, according to various embodiments of the disclosure, a method for determining a radio frequency (RF) at which a carrier phase is measured to support carrier phase positioning (CPP), and a method for reporting a CPP measurement report are proposed. The CPP may be applied to each of the downlink, uplink, and sidelink. According to various embodiments of the disclosure, channel structures and positioning methods for supporting positioning in the sidelink are proposed.

[Solution to Problem]

According to various embodiments of the disclosure, a method for processing a control signal in a wireless communication system may include receiving a first control signal transmitted from a base station, processing the received first control signal, and transmitting, to the base station, a second control signal generated based on the processing.

[Advantageous Effects of Invention]

According to embodiments of the disclosure, an apparatus and a method capable of effectively providing services in a wireless communication system are provided.
According to various embodiments of the disclosure, a method and a procedure for supporting positioning in a wireless communication system enable accurate positioning.
Advantageous effects obtainable from the disclosure may not be limited to the above-mentioned effects, and other effects which are not mentioned herein may be clearly understood from the following description by those skilled in the art to which the disclosure pertains.

[Brief Description of Drawings]

FIG. 1 is a flowchart illustrating a signal for positioning in a Uu interface according to various embodiments of the disclosure.

FIG. 2 is a flowchart illustrating a signal for positioning in a sidelink according to various embodiments of the disclosure.

FIG. 3 illustrates an example of positioning measurement through carrier phase positioning (CPP) according to various embodiments of the disclosure.

FIG. 4 illustrates an example of a method for determining a center frequency in a frequency band in which a positioning reference signal (RS) is transmitted according to various embodiments of the disclosure.

FIG. 5 illustrates an example of coordinates for acquisition of carrier phase differential according to various embodiment of the disclosure.

FIG. 6 illustrates a position of an automatic gain control (AGC) symbol in a physical channel structure for supporting positioning in a sidelink according to various embodiments of the disclosure.

FIG. 7 illustrates a functional structure of a UE according to various embodiments of the disclosure.

FIG. 8 illustrates a functional structure of a base station according to various embodiments of the disclosure.

[Mode for the Invention]

Hereinafter, embodiments of the disclosure will be described in detail with reference to the accompanying drawings.
In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.
For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.
The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.
Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

The following detailed description of embodiments of the disclosure is mainly directed to New RAN (NR) as a radio access network and Packet Core (5G system or 5G core network or next generation core (NG Core)) as a core network in the 5G mobile communication standards specified by the 3rd generation partnership project (3GPP) that is a mobile communication standardization group, but based on determinations by those skilled in the art, the main idea of the disclosure may be applied to other communication systems having similar backgrounds through some modifications without significantly departing from the scope of the disclosure.

In the 5G system, a network data collection and analysis function (NWDAF), which is a network function for analyzing and providing data collected in a 5G network, may be defined to support network automation. The NWDAF may collect/store/analyze information from the 5G network and provide the results to unspecified network functions (NFs), and the analysis results may be used independently in each NF.

In the following description, some of terms and names defined in the 3GPP standards (standards for 5G, NR, LTE, or similar systems) may be used for the sake of descriptive convenience. However, the disclosure is not limited by these terms and names, and may be applied in the same way to systems that conform other standards.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as used herein, and other terms referring to subjects having equivalent technical meanings may be used.

To meet the demand for wireless data traffic having increased since deployment of 4G communication systems, efforts have been made to develop an improved 5G communication system (new radio (NR)). The 5G communication system has been designed to support ultrahigh frequency (mmWave) bands (e.g., 28GHz frequency bands) so as to accomplish higher data rates. To decrease propagation loss of the radio waves and increase the transmission distance of radio waves in the ultrahigh frequency bands, beamforming, massive multiple-input multiple-output (massive MIMO), full dimensional MIMO (FD-MIMO), array antenna, analog beam forming, large scale antenna techniques are under discussion in the 5G communication systems. Furthermore, unlike LTE, the 5G communication system supports various subcarrier spacings including 15kHz, 30kHz, 60kHz, and 120kHz,, a physical control channels uses polar coding, and a physical data channel uses low density parity check (LDPC). In addition, CP-OFDM, as well as DFT-S-OFDM, is also used as a waveform for uplink transmission. While hybrid ARQ (HARQ) retransmission in units of transport blocks (TBs) are supported in LTE, HARQ retransmission based on a code block group (CBG) including a bundle of a plurality of code blocks (CBs) may be additionally supported in 5G.

In addition, in the 5G communication system, technical development for system network improvement is under way based on evolved small cells, advanced small cells, cloud radio access networks (cloud RANs), ultra-dense networks, device-to-device (D2D) communication, wireless backhaul, moving network, cooperative communication, coordinated multi-points (CoMPs), reception-end interference cancellation, and the like.

The Internet, which is a human centered connectivity network where humans generate and consume information, is now evolving to the Internet of things (IoT) where distributed entities, such as things, exchange and process information without human intervention. The Internet of everything (IoE), which is a combination of the IoT technology and the big data processing technology through a connection with a cloud server, etc. has emerged. As technology elements, such as "sensing technology", "wired/wireless communication and network infrastructure", "service interface technology", and "security technology" have been demanded for IoT implementation, a sensor network, a machine-to-machine (M2M) communication, machine type communication (MTC), and so forth have recently been researched. Such an IoT environment may provide intelligent Internet technology (IT) services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

In line with this, various attempts have been made to apply the 5G communication system to IoT networks. For example, technologies such as a sensor network, machine type communication (MTC), and machine-to-machine (M2M) communication are implemented by beamforming, MIMO, and array antenna techniques that are 5G communication technologies. Application of a cloud radio access network (cloud RAN) as the above-described big data processing technology may also be considered an example of convergence of the 5G technology with the IoT technology. As described above, a plurality of services may be provided to a user in a communication system, and in order to provide such a plurality of services to a user, a method for providing each service within the same time period according to the characteristics and an apparatus using the same are required. Various services provided in the 5G communication system are being studied, and one of the various services is a service that satisfies the requirements for low latency and high reliability. Furthermore, demands for mobile services are explosively increasing, and a location-based service (LBS) led by two requirements including an emergency service and a commercial application is rapidly developing.

Specifically, positioning (e.g., position measurement) may be performed through carrier phase positioning (CPP) in an NR system. However, it is well known that it is difficult to measure an actual distance by using a method for calculating the distance between two transmission and reception ends through carrier phase measurement due to a problem of integer ambiguity. However, the NR system may operate as an orthogonal frequency division multiplexing (OFDM)-based multi-carrier system, and phase measurement may be possible in one or multiple carriers. In addition, various time-based or angle-based positioning methods may be supported. Accordingly, methods for solving the problem of integer ambiguity exist.

The disclosure proposes a method for determining a radio frequency (RF) at which a carrier phase is measured in a multi-carrier system, a method for solving integer ambiguity through the same method, a method for reporting a measured carrier phase, and the like. The CPP may be applied to each of the downlink, uplink, and sidelink. According to various embodiments of the disclosure, channel structures and positioning methods for supporting positioning in the sidelink are proposed. Accurate positioning can be performed in a wireless communication system through the positioning methods proposed in the disclosure.

According to various embodiments of the disclosure, first, as a positioning method for measuring the position of a UE, a method using a positioning signal transmitted through the downlink and the uplink of a UE and a base station is described in detail.

In the disclosure, a method using a positioning signal transmitted through the downlink and the uplink between the UE and the base station may be referred to as radio access technology (RAT)-dependent positioning. In addition, the other positioning methods may be classified as RAT-independent positioning.

Specifically, the RAT-dependent positioning technique in the LTE system may include methods such as observed time difference of arrival (OTDOA), uplink time difference of arrival (UTDOA), and enhanced cell identification (E-CID). The RAT-dependent positioning technique in the NR system may include methods such as downlink time difference of arrival (DL-TDOA), downlink angle-of-departure (DL-AOD), multi-round trip time (multi-RTT), NR E-CID, uplink time difference of arrival (UL-TDOA), and uplink angle-of-arrival (UL-AOA).

According to an embodiment, the RAT-independent positioning technique may include methods such as assisted global navigation satellite systems (A-GNSS), a sensor, a wireless local area network (WLAN), and Bluetooth.

According to an embodiment, the RAT-dependent positioning in an interface (uplink and downlink, hereinafter, referred to as "Uu") between the base station and UEs may use a positioning protocol an LTE positioning protocol (LPP), LTE positioning protocol annex (LPPa), and NR positioning protocol annex (NRPPa). First, the LPP may be considered as a positioning protocol defined between the UE and a location server (LS), and the LPPa and the NRPPa may be considered as a protocol defined between the base station and the LS. Here, the LS is an entity for managing location measurement, and may include a function of a location management function (LMF). In addition, the LS may be referred to as an LMF or another term. The LPP is supported in both the LTE and NR systems, and the following roles for positioning may be performed through the LPP.

* Positioning capability exchange
* Assistance data transmission
* Location information transmission
* Error processing
* Abort

According to an embodiment, while the UE and the LS perform the roles above through the LPP, the base station may perform a role of enabling the UE and the LS to exchange positioning information. In this case, the exchange of the positioning information through the LPP may be transparently performed for the base station. This may mean that the base station may not be involved while the UE and the LS exchange positioning information.

According to an embodiment, in the case of the positioning capability exchanging above, the UE may exchange positioning information that can be supported by the UE with the LS. For example, the positioning information that can be supported by the UE may include information on whether the positioning method supported by the UE is a UE-assisted method, a UE-based method, or a UE-assisted and UE-based method. Here, the UE-assisted method may refer to a method in which the UE itself does not measure the absolute position of the UE, the UE transfers, based on an applied (or received) positioning signal, a measurement value for the positioning technique to the LS, and the absolute position of the UE is calculated by the LS. Here, the absolute position may mean two-dimensional (x, y) and three-dimensional (x, y, z) coordinate position information of the UE by the longitude and the latitude. Unlike the UE-assisted method, the UE-based method may refer to a method in which the UE itself measures the absolute position of the UE, and to this end, the UE needs to receive a positioning signal together with position information of an entity having transmitted the positioning signal. While only the UE-assisted method is supported in the LTE system, positioning based on both the UE-assisted method and the UE-based method can be supported in the NR system.

According to an embodiment, transmission of assistance data to measure an accurate position of the UE may be a very important factor in positioning. Specifically, the transmission of assistance data may include providing configuration information of a positioning signal, information on a transmission reception point (TRP) and a candidate cell for receiving the positioning signal, and the like to the UE by the LS. Specifically, when the DL-TDOA is used, the information on the TRP and the candidate cell for receiving the positioning signal may include information on at least one of a reference cell, a reference TRP, a neighbor cell, and a neighbor TRP. In addition, multiple candidates for the neighbor cell and the neighbor TRP may be provided, and information on a good cell and TRP to be selected by the UE to measure the positioning signal may be provided together.

In order for the UE to measure the accurate position, the UE needs to appropriately select reference candidate cell and TRP information. For example, when a channel for a positioning signal for a corresponding candidate cell and TRP is a channel having more line-of-site (LOS) channel components (e.g., a channel having fewer non-LOS (NLOS) channel components), the accuracy of the positioning measurement can be increased. Accordingly, when the LS provides the UE with the reference candidate cell and TRP information for positioning through collection of various pieces of information, the UE may perform more accurate positioning measurement.

According to an embodiment, the location information transmission may be performed through the LPP. The LS may request location information from the UE, and the UE may provide the LS with the location information measured upon the request. In the UE-assisted method, the location information may be a measurement value for a positioning technique based on the positioning signal received by the UE. Unlike the UE-assisted method, in the UE-based method, the location information may be two-dimensional (x, y) and three-dimensional (x, y, z) coordinate position values of the UE. When requesting location information from the UE, the LS may transfer information such as the required accuracy and response time as positioning quality of service (QoS) information. When the corresponding positioning QoS information is requested, the UE may provide the LS with the measured location information so that the corresponding accuracy and response time are satisfied, and when it is impossible to satisfy the QoS, the error processing and the abort may be performed. However, this is merely provided as an example, and the UE may perform the error processing and the abort of the positioning in a case other than the case in which the QoS cannot be satisfied.

According to various embodiments of the disclosure, the positioning protocol defined between the base station and the LS may be referred as "LPPa" in the LTE system, and at least one of the following functions may be performed between the base station and the LS.

* E-CID location information transmission
* OTDOA information transmission
* General error state reporting
* Assistance information transmission

According to an embodiment, the positioning protocol defined between the base station and the LS may be referred as "NRPPa" in the NR system, and in addition to the above-described roles performed by the LPPa, at least one of the following functions may be performed between the base station and the LS.

> * Positioning information transmission
> * Measurement information transmission
> * TRP information transmission

According to various embodiments of the disclosure, unlike the LTE system, more positioning techniques are supported in the NR system. Accordingly, through the above-described positioning information transmission, various positioning techniques can be supported. For example, through a positioning sound reference signal (SRS) transmitted by the UE, the base station may also perform positioning measurement. Accordingly, as the positioning information, information related to positioning SRS configuration and activation/deactivation may be exchanged between the base station and the LS.

According to an embodiment, the measurement information transmission may include a function in which the base station and the LS exchange information related to the multi-RTT, UL-TODA, and UL-AOA which are not supported in the LTE system. According to an embodiment, in the TRP information transmission, information related to performing positioning based on the TRP may be exchanged because cell-based positioning is performed in the LTE system while TRP-based positioning can be performed in the NR system.

According to various embodiments of the disclosure, the RAT-dependent positioning method supported through the sidelink (SL) can be also considered. The RAT-dependent positioning of the Uu interface may be possible only when the UE is within the base station coverage. When the UE performs communication using an SL within the base station coverage, a positioning protocol defined in the Uu may be used, and positioning through the LS may be performed. However, the RAT-dependent positioning of the SL may be also possible when the UE is out of the base station coverage. In this case, the SL LS and the SL positioning protocol may be defined. The corresponding protocol may be referred to as a "sidelink positioning protocol (SLPP)." Unlike the Uu, a UE connected to an LS may exist in the SLPP. The positioning protocol and the role of the SL LS may be similar to those described in the positioning procedure in the Uu.

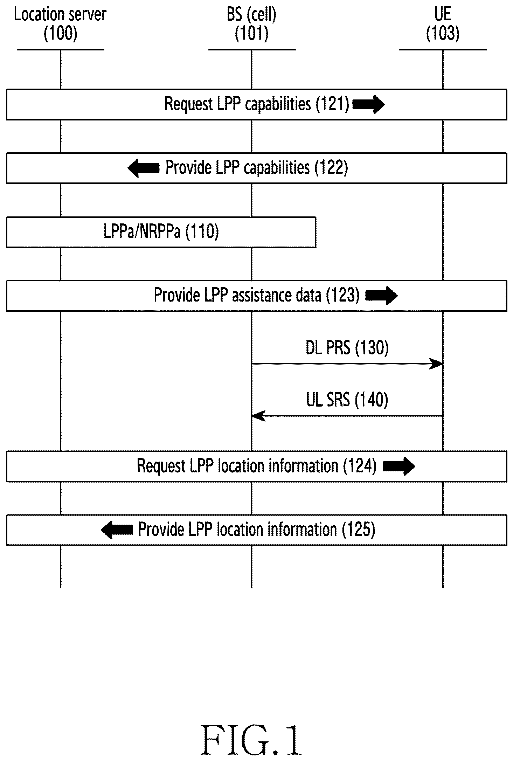

FIG. 1 is a flowchart illustrating a signal for positioning in a Uu interface according to various embodiments of the disclosure.

Referring to FIG. 1, in operation 121, a location server 100 may request UE capability from a UE 103 through an LPP.

In operation 122, the UE 103 may provide the location server with supportable positioning information. According to an embodiment, the information provided to the location server by the UE may include at least one of whether a positioning method supported by the UE is a UE-assisted method, a UE-based method, or a UE-assisted and UE-based method.

In operation 110, the location server 100 and a base station 101 may exchange, through an LPPa or an NRPPa, information required for positioning. For a detailed process thereof, the above-described information exchange function between the base station and the location server through the LPPa or the NRPPa may be referred to. According to an embodiment, the base station 101 may provide the location server 100 with positioning measurement information identified based on a UL SRS 140 received from the UE. In addition to this, the base station may transmit at least one of transmission (TX) timing error group (TEG) information or reception (RX) TEG information.

In operation 123, the location server 100 may transmit assistance data to the UE 103 through the LPP. For a detailed process thereof, the above-described function of the LPP may be referred to. According to an embodiment, provided that configuration information of the positioning signal is included, the base station 101 may transmit a DL positioning reference signal (PRS) 130 to the UE 103, or the UE 103 may transmit the UL SRS 140 for positioning to the base station 101.

In operation 124, the location server 100 may request location information from the UE 103 through the LPP.

In operation 125, the UE 103 may provide the location information through the LPP. According to an embodiment, the location information provided by the UE in operation 125 may include positioning measurement information through the DL PRS 130 in the case of the UE-assisted method. Unlike this, the location information provided by the UE may include coordinate location information calculated by the UE in the case of the UE-based method. The UE may transmit RX TEG information of the UE as well as the location information in operation 125.

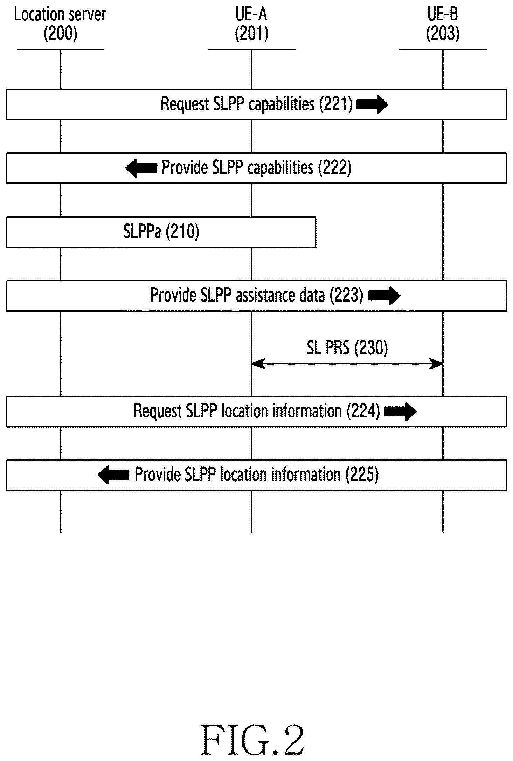

FIG. 2 is a flowchart illustrating a signal for positioning in a sidelink according to various embodiments of the disclosure.

Referring to FIG. 2, in operation 221, a location server 200 may request, through a sidelink positioning protocol (SLPP), UE capability from the UE 203 performing positioning measurement and calculation. Here, the UE 201 is a UE to which the location server is connected, and may be referred to as a "server UE." However, according to various embodiments of the disclosure, the disclosure is not limited thereto, and specifically, the UE is not limited to the term "server UE." For example, the SLPP may perform a function identical or similar to that of the above-described LPP, but may be referred to as another term as a positioning protocol defined for positioning of the UE that is out of the base station coverage.

In operation 222, the UE 203 may provide the location server 200 connected to the server UE 201 with supportable positioning information. For example, the supportable positioning information may include at least one of whether the positioning method supported by the UE is a UE-assisted method, a UE-based method, or a UE-assisted and UE-based method. When the UE is within the base station coverage, the location server may be connected to the base station. Unlike this, when the UE is out of the base station coverage, the location server may be a location server connected to the UE.

In operation 210, the location server 200 and the server UE 201 may exchange information required for positioning through a sidelink positioning protocol annex (SLPPa). For example, the server UE 201 may provide the location server 200 connected to the UE with positioning measurement information through the SL PRS 240 received from another UE 203. In addition to this, the UE may transmit at least one of TX TEG information or RX TEG information of the server UE 201. The SLPPa performs a function identical or similar to that of the above-described LPPa or NRPPa, but may be referred as another term as a positioning protocol defined in the SL. In addition, the SLPPa may not be defined.

In operation 223, the location server 200 may transmit, through the SLPP, assistance data to another UE 203 through the server UE 201. For example, provided that configuration information of the positioning signal is included, the server UE 201 may transmit an SL PRS 230 to another UE 203, or the UE 203 may transmit the SL PRS 230 for positioning to the server UE 201.

In operation 224, the location server 200 may request, through the SLPP, location information from another UE 203 through the server UE 201.

In operation 225, the UE 203 may provide, through the SLPP, location information to the location server 200 connected to the server UE 201. In operation 225, the location information provided by the UE may include positioning measurement information through the SL PRS 230 in the case of the UE-assisted method. Unlike this, the location information provided by the UE may include coordinate location information calculated by the UE in the case of the UE-based method. The UE 203 may transmit at least one of TX TEG information or RX TEG information of the UE 203 as well as the location information in operation 225.

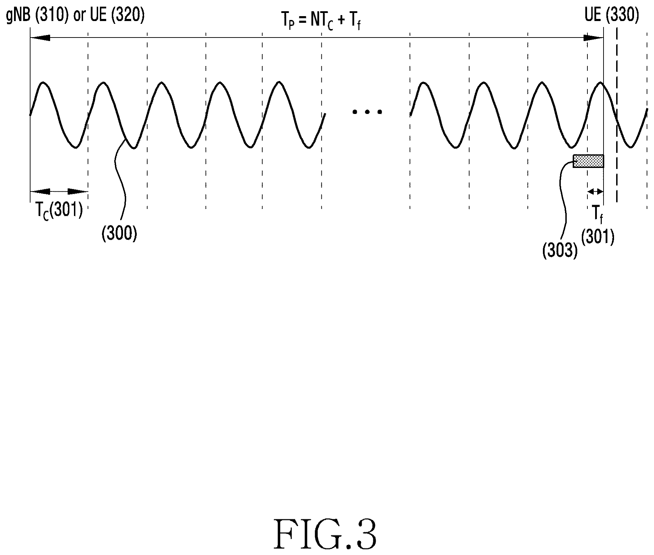

FIG. 3 illustrates an example of positioning measurement through carrier phase positioning (CPP) according to various embodiments of the disclosure. According to various embodiments of the disclosure, a method for measuring the position of the UE through carrier phase measurement may be referred to as CPP.

Referring to FIG. 3, an example of measuring a carrier phase between two transmission and reception ends (hereinafter, performing carrier phase measurement) is illustrated. Specifically, FIG. 3 may include a case of measuring a carrier phase through the downlink or uplink between a base station 310 and a UE 330 or a case of measuring a carrier phase through a sidelink between a UE 320 and another UE 330. Accordingly, the carrier phase measurement may include a case where the UE performs the carrier phase measurement and a case where the base station (e.g., TRP) performs the carrier phase measurement.

As illustrated in FIG. 3, for a frequency signal 300, the carrier phase may be measured as shown in Equation 1 below.

$$[Equation\ 1]$$
$$\varphi = 2\pi f_c T_p \bmod 2\pi = 2\pi f_c T_p - 2\pi N$$

According to [Equation 1], $f_c$ may indicate an RF at which the carrier phase is measured, and $T_p$ may indicate the distance between two transmission and reception ends. The frequency signal 300 in $f_c$ may have a shape of a periodic wave as illustrated in FIG. 3, and the phase may differ by $2\pi$ as each wavelength passes. Accordingly, the carrier phase measured as in [Equation 1] may be measured as a phase remaining after $N$ (positive integer) repeated wavelengths. Through the carrier phase measurement, the distance $T_p$ between two transmission and reception ends may be also represented by [Equation 2] below.

$$[Equation\ 2]$$
$$T_p = NT_c + T_f$$

According to [Equation 2], $T_c$ may indicate the length of one wavelength, and may be represented by

$$T_c = \frac{3 \cdot 10^8 m/s}{f_c}$$

in consideration of $f_c$ corresponding to the RF at which the carrier phase is measured and $3 \cdot 10^8 m/s$ corresponding to the speed of light. In addition, $T_f$ may be a value obtained by converting the phase remaining after $N$ (positive integer) repeated wavelengths into the length. However, a problem that the value of $N$ (positive integer) presented in [Equation 1] and [Equation 2] is difficult to be obtained. This may be referred to as the well-known "integer ambiguity" problem. According to various embodiments of the disclosure, a method for solving the integer ambiguity problem and performing positioning through carrier phase measurement is described in detail.

A positioning method according to various embodiments of the disclosure may be applied to each of the downlink, uplink, and sidelink of the wireless communication system. In addition, one or more of the following embodiments can be combined and used.

**<First Embodiment>**

The first embodiment proposes a first method of determining an RF at which a carrier phase is measured in a multi-carrier system.

The first method may include a method for determining an RF for carrier phase measurement as a center frequency of a frequency band in which a positioning reference signal (RS) is transmitted. The frequency band in which positioning RS is transmitted may mean a frequency band in which a downlink positioning reference signal (DL PRS) is transmitted in the case of the downlink, and may be referred to as a downlink positioning frequency layer (DLPFL). Unlike this, the frequency band in which positioning RS is transmitted may mean a frequency band in which a sounding reference signal (SRS) is transmitted in the case of the uplink. Lastly, the frequency band in which positioning RS is transmitted may mean a frequency band in which a sidelink positioning reference signal (SL PRS) is transmitted.

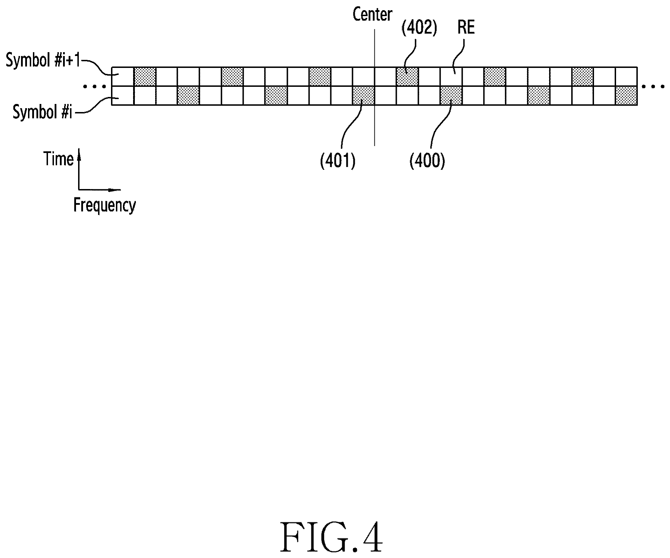

FIG. 4 illustrates an example of a method for determining a center frequency in a frequency band in which a positioning reference signal (RS) is transmitted according to various embodiments of the disclosure.

Referring to FIG. 4, an example of a case where a positioning RS 400 is transmitted in a comb-4 pattern on the frequency (e.g., an RS is transmitted every four resource elements (REs)) is illustrated. Referring to FIG. 4, an example of a case where the positioning RS 400 is transmitted over two OFDM symbols (e.g., symbol #i and symbol #i+1).

According to an embodiment, according to the first method, as illustrated in FIG. 4, the RS may not be transmitted in the center frequency of the frequency band in which the positioning RS is transmitted. According to various embodiments of the disclosure, in this case, the following methods for measuring the carrier phase of the center frequency are described.

**Method for Measuring Carrier Phase in Center Frequency of Frequency Band in Which Positioning RS Is Transmitted**

**Case 1:** Case Where Carrier Phase Is Independently Measured at Each OFDM Symbol in Which Positioning RS Is Transmitted

**Case 1-1:** Case Where RS Exists Within Center Frequency of Frequency Band in Which Positioning RS Is Measured

**Method 1-1-1:** A carrier phase may be measured in a carrier in which an RS at a corresponding center frequency is transmitted.

**Method 1-1-2:** A carrier phase is measured in carriers in which neighboring (e.g., adjacent) X RSs are transmitted, including a carrier in which an RS at a corresponding center frequency is transmitted, and then a carrier phase in the center frequency is measured and correct by using various algorithms such as interpolation.

**Case 1-2:** Case Where RS Does Not Exist in Center Frequency of Frequency Band in Which Positioning RS Is Measured

**Method 1-2-1:** A carrier phase is measured in carriers in which X RSs around the center frequency are transmitted, and then a carrier phase in the center frequency is measured and corrected by using various algorithms such as interpolation.

**Method 1-2-2:** A carrier phase is measured in a carrier in which an RS closest from the center frequency is transmitted.

According to an embodiment, referring to FIG. 4, a carrier phase may be measured in a carrier corresponding to an RE 401 in OFDM symbol #i.

According to an embodiment, referring to FIG. 4, a carrier phase may be measured in a carrier corresponding to an RE 402 in OFDM symbol #i+1.

**Case 2:** Case Where Carrier Phase Is Measured in All OFDM Symbols in Which RS Is Transmitted (for example, a case where a positioning RS is transmitted in only one OFDM symbol may be the same as Case 1 described above, and in Case 2, a case where the positioning RS is transmitted in one or more OFDM symbols may be assumed.)

**Case 2-1:** Case Where RS Exists in Center Frequency of Frequency Band in Which Positioning RS Is Transmitted

**Method 2-1-1:** A carrier phase is measured in one specific symbol and in a carrier in which an RS at a corresponding center frequency is transmitted. Here, the specific symbol may indicate one specific symbol including a first symbol and a last symbol, and may indicate a symbol including an RS at a center frequency of a frequency band in which a positioning RS is transmitted.

**Method 2-1-2:** A carrier phase is measured in all OFDM symbols in which a positioning RS is transmitted and in carriers in which neighboring X RSs are transmitted, including a carrier in which an RS at a corresponding center frequency is transmitted, and then a carrier phase at the center frequency is measured and correct by using various algorithms such as interpolation.

**Case 2-2:** Case Where RS Does Not Exist at Center Frequency of Frequency Band in Which Positioning RS Is Transmitted

**Method 2-2-1:** A carrier phase is measured in all OFDM symbols in which a positioning RS is transmitted and in carriers in which X RSs around the center frequency are transmitted, and then a carrier phase at a center frequency is measured and corrected by using various algorithms such as interpolation.

**Method 2-2-2:** A carrier phase is measured in a carrier in which an RS closest from the center frequency is transmitted

According to an embodiment, referring to FIG. 4, an RS closest from the center frequency in OFDM symbol #i and OFDM symbol #i+1 is an RE 401, and thus the carrier frequency may be measured in the corresponding carrier. When there are one or more closest carriers, a method for selecting one of the carriers or obtaining an average thereof may be considered.

According to various embodiments of the disclosure, the disclosure is not limited to the above-described methods only. In addition, one or more of the above-described methods may be combined and used. When one or more methods are supported and used, a method to be used may be separately indicated, and for the corresponding indication, a higher-layer indication method through a positioning protocol (e.g., a medium access control (MAC)-control element (CE) or radio access control (RRC) may be used, or a lower-layer indication method through downlink control information (DCI) or sidelink control information (SCI) may be considered.

According to the above-described first method, when the RF for carrier phase measurement is supported at the center frequency of the frequency band in which the positioning RS is transmitted, the following method may be considered as a method for solving the integer ambiguity problem.

[Equation 3]
$$T_{p-other} = NT_c + T_f + e_{p-other}$$

According to [Equation 3], $T_{p-other}$ may indicate the distance between two transmission and reception ends, measured through other positioning methods. In addition, $e_{p-other}$ may indicate an error value generated when $T_{p-other}$ is measured through other position methods. For descriptions of other parameters, the descriptions made with reference to FIG. 3, [Equation 1], and [Equation 2] may be referred to. For other positioning methods which can be supported in a wireless communication system, the descriptions above are referred to.

According to an embodiment, referring to [Equation 3], a value N may be accurately measured for a case where $e_{p-other}$ has a small value. More specifically, referring to FIG. 3, the value of $e_{p-other}$ may need to be at least smaller than

$$\pm \frac{T_c}{2}.$$

In other words, whether the value N can be measured through [Equation 3] may be determined according to $f_c$ corresponding to the RF at which the carrier phase is measured by $T_c = \frac{3 \cdot 10^8 m/s}{f_c}$ . [Table 1] below shows values of $T_c$ according to $f_c$.

[Table 1]

| $f_c$ | $T_c$ |
|---|---|
| 3GHz | 10cm |
| 700MHz | 43cm |
| 50MHz | 6m |
| 10MHz | 30m |
| 1MHz | 300m |

According to [Table 1], the value of $T_c$ is in centimeters in 3 GHz or 700 MHz corresponding to a carrier frequency in which a wireless communication system actually operates, and thus the accuracy of $T_{p-other}$ measured using other positioning methods which can be supported in the wireless communication system needs to be in centimeters. However, in practice, other positioning methods which can be supported in the wireless communication system do not support the accuracy in centimeters, and thus it may be difficult to accurately measure the value N through [Equation 3]. In other words, in the carrier frequency in which the wireless communication system actually operates, the integer ambiguity problem may be difficult to be solved using [Equation 3]. Hereinafter, methods for solving the above-described problem detail according to various embodiments of the disclosure is described in detail.

**<Second Embodiment>**

The second embodiment proposes a second method for determining an RF for carrier phase measurement in a multi-carrier system.

The second method may include a method for defining one or more RFs for carrier phase measurement and measuring a carrier phase in the one or more RFs. In the second method, the number of RFs may be Y in general. In addition, Y may be limited to Y=2. According to the method described above, the carrier phase can be measured in a low carrier frequency by using a different between different RFs. A difference of the carrier phases measured in two different frequencies from [Equation 1] may be shown as in [Equation 4].

[Equation 4]
$$\varphi_1 - \varphi_2 = 2\pi(f_{c1} - f_{c2})T_P - 2\pi(N_1 - N_2)$$

The carrier phase can be measured in a low carrier frequency according to the value of $f_{c1}$ - $f_{c2}$ in [Equation 4]. In other words, the integer ambiguity problem can be solved in the carrier frequency band in which the wireless communication system actually operates. For example, when $f_{c1}$=3340MHz and $f_{c2}$=3330MHz are determined, $f_{c1}$ - $f_{c2}$ = 10MHz, and the value of $T_c$ can be 30 m as shown in [Table 1]. Unlike the first embodiment, the value of $N_1$ - $N_2$ in [Equation 4] can be accurately measured by using other positioning methods that can be supported in the wireless communication system (by substituting $T_{p-other}$ into $T_P$). Accordingly, when the measured values of $N_1$ - $N_2$ and $\varphi_1$ - $\varphi_2$ are substituted into [Equation 4] again, the distance $T_P$ between two transmission and reception ends may be measured.

The following methods for defining one or more RFs for carrier phase measurement according to the above-described second method are described.

**Method for Defining One or More RFs for Measurement of Carrier Phase**

**Method 1:** A frequency offset value may be indicated from a center frequency of a frequency band in which a positioning RS is transmitted.

One RF for measurement of a carrier phase in method 1 may be a center frequency of a frequency band in which a positioning RS is transmitted.

An additional RF for measurement of a carrier phase may be determined according to the number of frequency offset values in method 1.

The frequency offset value in method 1 may be determined in units of the number of subcarrier REs or the number of physical resource blocks (PRBs).

The frequency offset value in method 1 may be indicated in consideration of an RE in which an RS is transmitted, according to a frequency pattern in which a positioning RS is transmitted.

The method for indicating the frequency offset value in method 1 may be a limitation in determining $f_{c1}$ - $f_{c2}$ in [Equation 4] when the frequency band in which the positioning RS is transmitted is low.

For the frequency offset value in method 1, a high-layer indication method (MAC-CE or RRC) through a positioning protocol may be used, or a lower-layer indication method through DCI or SCI may be considered.

**Method 2:** A start frequency or a last frequency of a frequency band in which a positioning RS is transmitted may be defined as an RF.

A center frequency of the frequency band in which the positioning RS is transmitted may be additionally used in method 2.

The start frequency of the frequency band in method 2 may correspond to a start subcarrier, and the last frequency may correspond to a last subcarrier.

Both the start frequency and the last frequency of the frequency band may be used in method 2.

Method 2 may be a method not separately requiring an additional indication.

**Method 3:** A specific frequency or frequency range within a frequency band in which a positioning RS is transmitted may be indicated.

A center frequency of the frequency band in which the positioning RS is transmitted may be additionally used in method 3.

The specific frequency or frequency range in method 3 may correspond to a specific subcarrier or subcarrier range.

The specific frequency range (e.g., subcarrier range) in method 3 may be configured to include Y or Y-1 RFs in the second method described above.

A gap value may be indicated together with the specific frequency range (e.g., subcarrier range) in method 3, and an RF for measurement of a carrier phase at intervals of a gap value within the frequency range (e.g., subcarrier range) may be defined.

For the specific frequency or frequency range in method 3, a higher-layer indication method (MAC-CE or RRC) through a positioning protocol may be used, and a lower-layer indication method through DCI or SCI may be considered.

**Method 4:** A UE may determine an additional RF for measurement of a carrier phase.

One RF frequency for carrier phase measurement in method 4 may be a center frequency of a frequency band in which a positioning RS is transmitted.

In method 4, a UE may determine one or more additional RFs for carrier phase measurement.

In method 4, the UE may transfer the additional RFs for carrier phase measurement to a location server through a higher-layer indication method (MAC-CE or RRC) through a positioning protocol.

According to various embodiments of the disclosure, the disclosure is not limited to the methods described above. In addition, one or more of the above-described methods may be combined and used. When one or more of the methods are combined or supported and used, a method to be used may be separately indicated, and for the corresponding indication, a higher-layer indication method (MAC-CE or RRC) through a positioning protocol may be used, or a lower-er-layer indication method through DCI or SCI may be considered. Unlike this, different methods may be selected according to the size of the frequency band in which the positioning RS is transmitted, and the selected methods may be used. For example, when the size of the frequency band in which the positioning RS is transmitted is greater than a specific threshold value, method 1 may be used, or otherwise, method 2 may be considered. In this case, the threshold value may be determined by the location server, may be indicated by a higher-layer indication method (MAC-CE or RRC) through a positioning protocol, or a lower-layer indication method through DCI or SCI.

**<Third Embodiment>**

The third embodiment proposes a third method for determining an RF for carrier phase measurement in a multi-carrier system.

The third method may include a method based on carrier phase differential. Specifically, when [Equation 1] is differentiated, it may be represented by [Equation 5] below.

[Equation 5]

$$\frac{d}{df_c}(\varphi) = 2\pi T_p$$

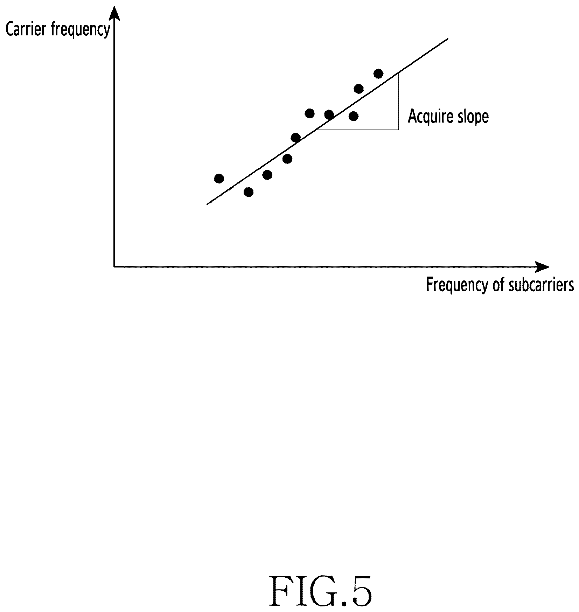

According to [Equation 5], a part corresponding *N* (positive integer) in [Equation 1] may disappear, and accordingly, the integer ambiguity problem can be solved. A method for obtaining a value of $\frac{d}{df_c}(\varphi)$ corresponding to carrier phase differential in [Equation 5] is described in detail with reference to FIG. 5.

FIG. 5 illustrates an example of coordinates for acquisition of carrier phase differential according to various embodiment of the disclosure. More specifically, FIG. 5 illustrates a method for acquiring a value of $\frac{d}{df_c}(\varphi)$ in [Equation 5] according to embodiments of the disclosure.

Referring to FIG. 5, in a multi-carrier system, carrier phases may be measured in multiple subcarriers, and a variation $\frac{d}{df_c}(\varphi)$ (e.g., the slope illustrated in FIG. 5) of carrier phases according to the change of the frequency, based on the measured carrier phases. This may be referred to as carrier phase differential. As in [Equation 1], for the carrier phase, the wavelength is repeated by the period of $2\pi$ (e.g., $2\pi$ discontinuities), the carrier phase measured to obtain the slop may be unwrapped and calculated.

**<Fourth Embodiment >**

The fourth embodiment proposes a method for reporting a carrier phase measured in a multi-carrier system. According to various embodiments of the disclosure, with regards to the reporting of the measured carrier phase, the carrier phase may be independently measured for each OFDM symbol in which the positioning RS is transmitted according to Case 1 in the first embodiment and may be reported at each RF. Alternatively, with regards to the reporting of the measured carrier phase, the carrier phase may be measured for all OFDM symbols in which the positioning RS is transmitted according to Case 2 in the first embodiment and may be reported at each RF.

Hereinafter, according to various embodiments of the disclosure, in addition to the methods described in the first embodiment to the third embodiment above, methods for reporting carrier phases measured by the UE and the base station (e.g., TRP) to the location server are described. Here, the location server may be a location server connected to the base station, or may be a location server connected to the UE. In addition, the reporting of the measured carrier phase in the disclosure may not be limited to the reported made to the location server. For example, the measured carrier phase may include carrier phases measured by a base station or other UEs not connected to the location server.

**Method for Reporting Measured Carrier Phase**

**Method 1:** A carrier phase is measured in each RF determined for carrier phase measurement and reported.

Method 1 can be applied to the first method in the first embodiment and the second method in the second embodiment.

**Method 2:** A difference of carrier phases measured at two RFs determined for carrier phase measurement may be calculated and reported.

Method 2 can be applied to the second method in the second embodiment.

The difference of carrier phases measured in two RFs in method 2 may include an instantaneous value measured at a specific time point or an average value over time.

**Method 3:** The carrier phase differential may be calculated at RFs determined for carrier phase measurement and reported.

Method 1 can be applied to the third method in the third embodiment.

According to various embodiments of the disclosure, the reporting of the measured carrier phase may use a higher-layer indication method (MAC-CE or RRC) through a positioning protocol. When the measured carrier phase is reported to a base station or other UEs not connected to the location server, a lower-layer indication method (PUSCH, SCI, etc.) may be considered.

According to various embodiments of the disclosure, the disclosure is not limited to the methods described above. In addition, one or more of the above-described methods may be combined or supported and used. When one or more of the methods are combined or supported and used, a method to be used may be separately indicated, and for the corresponding indication, a higher-layer indication method (MAC-CE or RRC) through a positioning protocol may be used, or a lower-layer indication method through DCI or SCI may be considered. Unlike this, different methods may be selected according to the size of the frequency band in which the positioning RS is transmitted, and the selected methods may be used. For example, when the size of the frequency band in which the positioning RS is transmitted is greater than a specific threshold value, method 1 may be used, or otherwise, method 2 may be considered. In this case, the threshold value may be determined by the location server, may be indicated by a higher-layer indication method (MAC-CE or RRC) through a positioning protocol, or a lower-layer indication method through DCI or SCI.

**<Fifth Embodiment>**

The fifth embodiment proposes an entire procedure for supporting CPP.

An entire procedure for supporting CPP is described with reference to corresponding drawings in which the positioning procedures in the Uu and SL are described through FIGS. 1 and 2 above.

According to various embodiments of the disclosure, in order to support CPP, the UE and the base station (e.g., TRP) may exchange capability information related to the CPP with the location server (e.g., corresponding to operations 121 and 122 in FIG. 1 and operations 221 and 222 in FIG. 2). The capability information related to the CPP may include information on whether the CPP is supported and the number of RFs at which the carrier phase can be measured when the CPP can be supported. According to an embodiment, the capability information may further include information on whether carrier phase differential can be performed. According to an embodiment, the capability information may also include information on whether UE-based CPP can be performed. Here, the UE-based CPP may mean that the UE itself calculates coordinate position information, based on a result of the measurement.

According to an embodiment, the location server may provide the UE with assistant data information related to the CPP, based on the capability information related to the CPP (e.g., corresponding to operation 123 in FIG. 1).

According to an embodiment, the location server may exchange information related to the CPP with the base station (e.g., TRP), based on the capability information related to the CPP (e.g., corresponding to operation 110 of FIG. 1).

According to an embodiment, the server UE may provide the UE with the assistant data information related to the CPP, based on the capability information related to the CPP (e.g., corresponding to operation 223 in FIG. 2).

According to an embodiment, the location server may exchange information related to the CPP with the server UE, based on the capability information related to the CPP (e.g., corresponding to operation 210 in FIG. 2).

According to an embodiment, the location server may request CPP from the UE (e.g., corresponding to operation 124 in FIG. 1).

According to an embodiment, the server UE may request CPP from another UE (e.g., corresponding to operation 224 in FIG. 2).

According to an embodiment, the CPP request according to the method suggested in the first embodiment may be a method for measuring a carrier phase at one RF (e.g., the center frequency) according to the first method in the first embodiment.

According to an embodiment, the CPP request according to the method suggested in the second embodiment may be method for measuring a carrier phase in Y RFs according to the second method in the second embodiment.

According to an embodiment, the CPP request according to the method suggested in the third embodiment may be a method for calculating the carrier phase differential by measuring carrier phases at multiple RFs according to the third method in the third embodiment.

According to various embodiments, at least one of all, some, or a combination of some of the above-described embodiments may be included.

**<Sixth Embodiment>**

The sixth embodiment proposes a physical channel structure and positioning methods for supporting positioning in a sidelink.

According to various embodiments of the disclosure, a dedicated resource pool for supporting positioning in a sidelink may be used. In the dedicated resource pool, a physical channel structure that is different from that in the legacy sidelink data communication resource pool. More specifically, a signal and a channel transmitted in the dedicated resource pool may include an SL-PRS and a physical sidelink control channel (PSCCH). However, according to various embodiments of the disclosure, the signal and channel transmitted in the dedicated resource pool is not limited to the SL-PRS or the PSCCH.

According to an embodiment, the following principles may be used to configure a physical channel structure in the dedicated resource pool for supporting positioning in the sidelink.

- An SL-PRS and a PSCCH may be time division multiplexed (TDM).
- The PSCCH may be transmitted from the second symbol of a slot on a time resource.
- The symbol length of the PSCCH may be X symbols. For example, X may be a value of 1 to 3, and the symbol length of the PSCCH may be configured or pre-configured as resource pool information.
- The PSCCH may be mapped from a PRB identical to the lowest PRB of the frequency domain in which the SL-PRS is transmitted on the frequency resource and transmitted.
- The frequency domain in which the SL-PRS is transmitted may be determined through resource allocation within the size of the position of the configured subchannel.

**Method 1:** The size and the position of the subchannel in which the SL-PRS is transmitted may be configured or pre-configured as resource pool information.

**Method 2:** The size and the position of the subchannel in which the SL-PRS is transmitted may be determined by the location server. In this case, the corresponding information may be indicated through higher-layer signaling (MAC-CE or RRC) through a positioning protocol.

The size and the position of the subchannel may be indicated through a combination of methods 1 and 2 described above.

- The PSCCH may be mapped and transmitted in the same manner as the frequency domain in which the SL-PRS is transmitted.

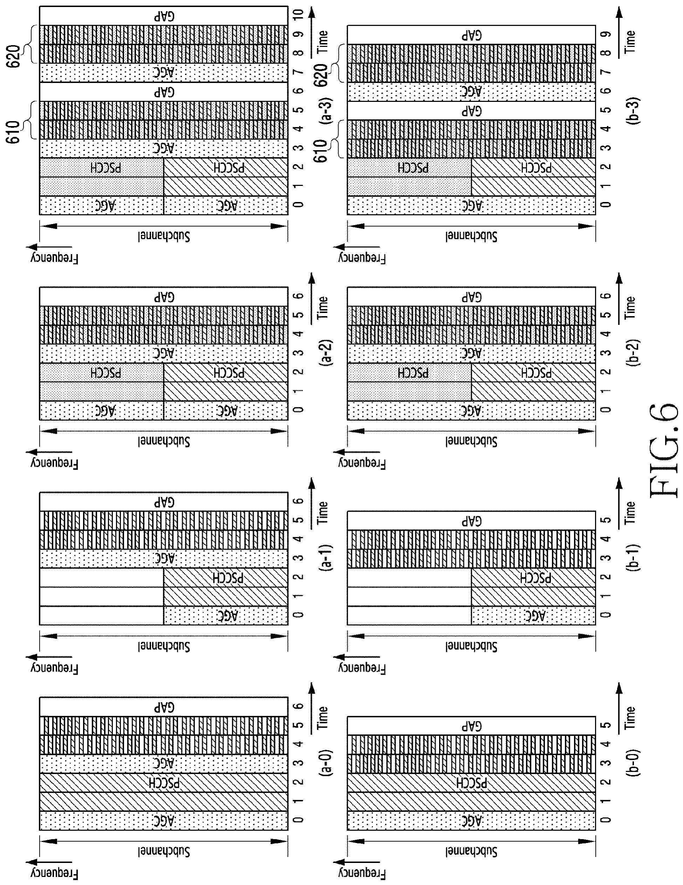

In this case, a PSCCH RE in the first symbol in which the PSCCH is transmitted may be copied and used as an automatic gain control (AGC) symbol. A description of the position at which the AGC symbol is mapped refers to below. For example, in part (b-3) in FIG. 6, a PSCCH RE in symbol 1 may be copied and mapped to an AGC symbol in symbols 0 and 6.

When the PSCCH is not mapped in the same manner as the frequency domain in which the SL-PRS is transmitted and transmitted, REs of the SL-PRS may be copied and used as an AGC symbol. According to an embodiment, a description of the position at which the AGC symbol is mapped may refer to below. For example, in part (b-1) in FIG. 6, REs of the SL-PRS in symbols 3 and 4 may be copied and mapped to the AGC symbol of symbol 0.

According to an embodiment, in part (b-1) in FIG. 6, REs of the SL-PRSs in symbol 3 may be copied and mapped to the AGC symbol in symbol 0. According to an embodiment, in part (a-1) in FIG. 6, REs in the SL-PRS in symbols 4 and 5 may be copied and mapped to the AGC symbol in symbol 3. According to an embodiment, in part (a-1) in FIG. 6, REs in the SL-PRS in symbol 4 may be copied and mapped to the AGC symbol in symbol 3. According to an embodiment, in part (a-1) in FIG. 6, the AGC symbol in symbol 0 may be obtained when the PSCCH RE in symbol 1 is copied and mapped. According to an embodiment, in part (a-1) in FIG. 6, the AGC symbol in symbol 0 may be obtained when the REs of the SL-PRS in symbols 4 and 5 are copied and mapped.

- An SL-PRS may be transmitted in a Comb-N pattern in the frequency domain.
- A PSCCH may be transmitted while the area in which the PSCCH is transmitted in the frequency resource and the SL-PRS Comb pattern and position are associated.

According to an embodiment, the number of PSCCHs frequency division multiplexed (FDM) in the frequency domain may be determined according to the size of the Comb pattern. For example, in the case of Comb-N, N PSCCHs may be FDM-ed in the frequency domain and transmitted (e.g., parts (a-2), (a-3), (b-2), and (b-3) in FIG. 6). This may include a case where multiple UEs are simultaneously multiplexed through Comb-based multiplexing. Whether the Comb-based multiplexing is performed may be pre-configured or configured as resource pool information, or may be indicated via higher-layer signaling (MAC-CE or RRC) through a positioning protocol.

- An SL-PRS resource maybe TDM-ed on the time domain.
- Y SL-PRS resources may be TDM-ed in the time domain.

This case may include a case where multiple UEs are simultaneously multiplexed through TDM-based multiplexing. Whether the TDM-based multiplexing is performed may be pre-configured or configured as resource pool information, or may be indicated via higher-layer signaling (MAC-CE or RRC) through a positioning protocol.

According to an embodiment, the SL-PRS resource may be configured while the TDM position (e.g., the position in the slot) in the time domain is fixed (e.g., parts (a-3) and (b-3) in FIG. 6).

According to an embodiment, the positions of the GAP symbol and the AGC symbol of the SL-PRS resource may be determined according to whether the TDM is performed in the time domain.

According to an embodiment, when TDM-based multiplexing is not used, a single AGC symbol may be transmitted at a first-symbol position of a slot. The GAP symbol may be transmitted at a last-symbol position of the slot.

According to an embodiment, when TDM-based multiplexing is used, a single AGC symbol may be transmitted at a first-symbol position of a slot. The GAP symbol may be transmitted after the first SL-PRS resource (610 in FIG. 6). Additionally, a single AGC symbol may be positioned before the TDM-ed SL-PRS resource (620 in FIG. 6), and a single GAP symbol may be positioned after the TDM-ed SL-PRS resource (620 in FIG. 6). Additionally, the number of GAP symbols and AGC symbols may increase according to the number of TDM-ed SL-PRS resources.

FIG. 6 illustrates a position of an automatic gain control (AGC) symbol in a physical channel structure for supporting positioning in a sidelink according to various embodiments of the disclosure.

Referring to FIG. 6, a case where an AGC symbol and a GAP symbol are positioned before and after all SL-PRS resources is illustrated with reference to parts (a-0), (a-1), (a-2), and (a-3) in FIG. 6. Parts (a-0) and (a-1) illustrate a case where Comb-based multiplexing is not used, and (a-0) illustrates a case where the PSCCH is mapped in the same manner as the frequency domain in which the SL-PRS is transmitted. Part (a-2) illustrates a case where Comb-based multiplexing is used. Part (a-3) illustrates a case where TDM-based multiplexing is additionally used.

Referring to parts (b-0), (b-1), (b-2), and (b-3) in FIG. 6, a case where an AGC symbol is not transmitted before the first SL-PRS resource is illustrated. Parts (b-0) and (b-1) illustrate a case where Comb-based multiplexing is not used, and (b-0) illustrates a case where the PSCCH is mapped in the same manner as the frequency domain in which the SL-PRS is transmitted. Part (b-2) illustrates a case where Comb-based multiplexing is used. Part (b-3) illustrates a case where TDM-based multiplexing is additionally used. The AGC symbol needs to be transmitted before the PSCCH, and thus, referring to FIG. 6, mapping the AGC symbol as in parts (b-0), (b-1), (b-2), and (b-3) can reduce overhead of the AGC symbol compared to the mapping as in parts (a-0), (a-1), (a-2), and (a-3).

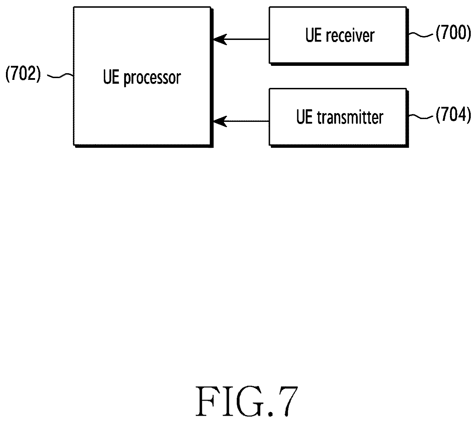

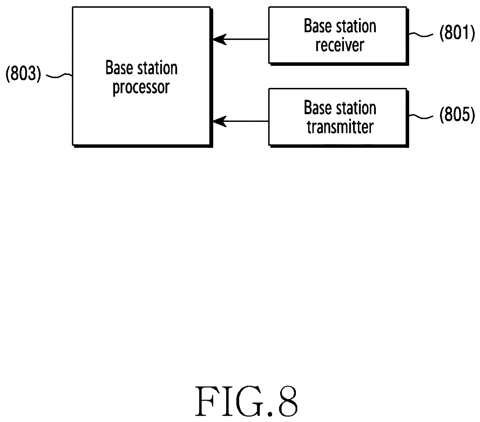

Transmitters, receivers, and processors or controllers of the UE and the base station for performing various embodiments of the disclosure are illustrated in FIG. 7 and FIG.8, respectively. According to the above embodiments, a method for performing positioning by the UE is described, and each of the transmitters, receivers, and processors of the UE and the base station may be operated according to the embodiments in order to perform the method.

FIG. 7 illustrates a functional structure of a UE according to various embodiments of the disclosure.

Specifically, FIG. 7 is a block diagram illustrating an internal structure of a UE according to an embodiment of the disclosure. As illustrated in FIG. 7, the UE of the disclosure may include a UE receiver 700, a UE transmitter 704, and a UE processor 702. In embodiments of the disclosure, the UE receiver 700 and the UE transmitter 704 as a whole may be referred to as a transceiver. The transceiver may transmit/receive signals with base stations. The signals may include control information and data. To this end, the transceiver may include an RF transmitter configured to up-convert and amplify the frequency of transmitted signals, an RF receiver configured to low-noise-amplify received signals and down-convert the frequency thereof, and the like. In addition, the transceiver may receive signals through a radio channel, output the same to the UE processor 702, and transmit signals output from the UE processor 702 through the radio channel. The UE processor 702 may control a series of processes so that the UE can operate according to the above-described embodiments of the disclosure.

FIG. 8 illustrates a functional structure of a base station according to various embodiments of the disclosure.

FIG. 8 is a block diagram illustrating an internal structure of a base station according to an embodiment of the disclosure. As illustrated in FIG. 8, the base station of the disclosure may include a base station receiver 801, a base station transmitter 805, and a base station processor 803. In embodiments of the disclosure, the base station receiver 801 and the base station transmitter 805 as a whole may be referred to as a transceiver. The transceiver may transmit/receive signals with UEs. The signals may include control information and data. To this end, the transceiver may include an RF transmitter configured to up-convert and amplify the frequency of transmitted signals, an RF receiver configured to low-noise-amplify received signals and down-convert the frequency thereof, and the like. In addition, the transceiver may receive signals through a radio channel, output the same to the base station processor 803, and transmit signals output from the base station processor 803 through the radio channel. The base station processor 803 may control a series of processes so that the base station can operate according to the above-described embodiments of the disclosure.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

**Claims**

1. A user equipment (UE) in a wireless communication system, the UE comprising:

   a transceiver; and
   a controller coupled to the transceiver,
   wherein the controller is configured to:

   receive, from a location management function (LMF) entity, information associated with a carrier phase positioning (CPP);
   receive positioning reference signals (PRSs) on multiple resources;
   measure a carrier phase, based on a center frequency of a frequency band associated with the multiple resources; and
   transmit, to the LMF entity, a measurement report of the carrier phase.

2. The UE of claim 1, wherein the carrier phase is measured based on a PRS on at least one resource adjacent to the center frequency.

3. The UE of claim 1,

   wherein the carrier phase is measured based on a PRS on a first resource located at the center frequency and a PRS on a second resource located at a different frequency from the first resource, and
   wherein the second resource includes at least one of a resource spaced apart from the first resource by a frequency offset value, a resource corresponding to a start frequency or a last frequency of the frequency band, or a resource within a specific frequency range in the frequency band.

4. The UE of claim 1, wherein the carrier phase is measured based on a variation of one or more carrier phases measured on the multiple resources.

5. A location management function (LMF) entity in a wireless communication system, the LMF entity comprising:

   a transceiver; and
   a controller coupled to the transceiver,
   wherein the controller is configured to:

   transmit, to a user equipment (UE), information associated with carrier phase positioning (CPP); and
   receive, from the UE, a measurement report of a carrier phase, and
   wherein the carrier phase is measured based on a center frequency of a frequency band associated with multiple resources on which positioning reference signals (PRSs) are transmitted.

6. The LMF entity of claim 5, wherein the carrier phase is measured based on a PRS on at least one resource adjacent to the center frequency.

7. The LMF entity of claim 5,

   wherein the carrier phase is measured based on a PRS on a first resource located at the center frequency and a PRS on a second resource located at a different frequency from the first resource, and
   wherein the second resource includes at least one of a resource spaced apart from the first resource by a frequency offset value, a resource corresponding to a start frequency or a last frequency of the frequency band, or a resource within a specific frequency range in the frequency band.

8. The LMF entity of claim 5, wherein the carrier phase is measured based on a variation of one or more carrier phases measured on the multiple resources.

9. A method performed by a user equipment (UE) in a wireless communication system, the method comprising:

   receiving, from a location management function (LMF) entity, information associated with carrier phase positioning (CPP);
   receiving positioning reference signals (PRSs) on multiple resources;
   measuring a carrier phase, based on a center frequency of a frequency band associated with the multiple resources; and
   transmitting, to the LMF entity, a measurement report of the carrier phase.

10. The method of claim 9, wherein the carrier phase is measured based on a PRS on at least one resource adjacent to the center frequency.

11. The method of claim 9,

   wherein the carrier phase is measured based on a PRS on a first resource located at the center frequency and a PRS on a second resource located at a different frequency from the first resource, and

wherein the second resource includes at least one of a resource spaced apart from the first resource by a frequency offset value, a resource corresponding to a start frequency or a last frequency of the frequency band, or a resource within a specific frequency range in the frequency band.

**12.** The method of claim 9, wherein the carrier phase is measured based on a variation of one or more carrier phases measured on the multiple resources.

**13.** A method performed by a location management function (LMF) entity in a wireless communication system, the method comprising:

transmitting, to a user equipment (UE), information associated with carrier phase positioning (CPP); and

receiving, from the UE, a measurement report of a carrier phase,

wherein the carrier phase is measured based on a center frequency of a frequency band associated with multiple resources on which positioning reference signals (PRSs) are transmitted.

**14.** The method of claim 13, wherein the carrier phase is measured based on a PRS on at least one resource adjacent to the center frequency.

**15.** The method of claim 13,

wherein the carrier phase is measured based on a PRS on a first resource located at the center frequency and a PRS on a second resource located at a different frequency from the first resource, and

wherein the second resource includes at least one of a resource spaced apart from the first resource by a frequency offset value, a resource corresponding to a start frequency or a last frequency of the frequency band, or a resource within a specific frequency range in the frequency band.

Location server
(100)

BS (cell)
(101)

UE
(103)

Request LPP capabilities (121) ➡

⬅ Provide LPP capabilities (122)

LPPa/NRPPa (110)

Provide LPP assistance data (123) ➡

DL PRS (130)

UL SRS (140)

Request LPP location information (124) ➡

⬅ Provide LPP location information (125)

FIG.1

| Location server (200) | UE-A (201) | UE-B (203) |
|---|---|---|

Request SLPP capabilities (221) ➡

⬅ Provide SLPP capabilities (222)

SLPPa (210)

Provide SLPP assistance data (223) ➡

SL PRS (230) ⬌

Request SLPP location information (224) ➡

⬅ Provide SLPP location information (225)

# FIG.2

gNB (310) or UE (320) $\qquad$ $T_P = NT_C + T_f$ $\qquad$ UE (330)

$T_C$(301)

(300)

(303) $T_f$ (301)

# FIG.3

FIG.4

FIG.5

FIG.6

(702) — | UE processor | ← | UE receiver | — (700)

| | ← | UE transmitter | — (704)

# FIG.7

(803) ~ | Base station processor | ← | Base station receiver | ~ (801)

| ← | Base station transmitter | ~ (805)

# FIG.8

## INTERNATIONAL SEARCH REPORT

| | International application No. |
|---|---|
| | **PCT/KR2024/095467** |

**A. CLASSIFICATION OF SUBJECT MATTER**

**H04W 64/00**(2009.01)i; **G01S 19/43**(2010.01)i; **H04W 24/08**(2009.01)i; **H04W 72/25**(2023.01)i; **H04L 5/00**(2006.01)i; **H04W 92/18**(2009.01)i

According to International Patent Classification (IPC) or to both national classification and IPC

**B. FIELDS SEARCHED**

Minimum documentation searched (classification system followed by classification symbols)

H04W 64/00(2009.01); G01S 5/10(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: LMF(location management function), CPP(carrier phase positioning), PRS(positioning reference signal), 자원(resource), 중심 주파수(center frequency), 측정(measurement)

**C. DOCUMENTS CONSIDERED TO BE RELEVANT**

| Category* | Citation of document, with indication, where appropriate, of the relevant passages | Relevant to claim No. |
|---|---|---|
| X | CATT. Further discussion on NR DL and UL carrier phase positioning. R1-2302711, 3GPP TSG RAN WG1 Meeting #112bis-e, e-meeting. 07 April 2023.<br>See sections 1-2.1.3. | 1-15 |
| X | INTEL CORPORATION. On DL and UL carrier phase positioning. R1-2302804, 3GPP TSG RAN WG1 Meeting #112bis-e, e-meeting. 08 April 2023.<br>See sections 1-2.1. | 1-2,4-6,8-10,12-14 |
| X | LG ELECTRONICS. Discussion on carrier phase positioning in NR. R1- 2303744, 3GPP TSG RAN WG1 Meeting #112bis-e, e-meeting. 07 April 2023.<br>See section 2. | 1-2,4-6,8-10,12-14 |
| A | IIT KANPUR et al. Discussion on NR DL and UL carrier phase positioning. R1-2303821, 3GPP TSG RAN WG1 Meeting #112bis-e, e-meeting. 07 April 2023.<br>See sections 2-2.5. | 1-15 |
| A | US 2023-0076490 A1 (QUALCOMM INCORPORATED) 09 March 2023 (2023-03-09)<br>See paragraphs [0167]-[0267]. | 1-15 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **12 June 2024** | **12 June 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| International application No. |
| --- |
| **PCT/KR2024/095467** |

| Patent document cited in search report | | | Publication date (day/month/year) | Patent family member(s) | | | Publication date (day/month/year) |
| --- | --- | --- | --- | --- | --- | --- | --- |
| US | 2023-0076490 | A1 | 09 March 2023 | KR | 10-2024-0046510 | A | 09 April 2024 |
| | | | | US | 11573286 | B1 | 07 February 2023 |
| | | | | WO | 2023-028395 | A1 | 02 March 2023 |

Form PCT/ISA/210 (patent family annex) (July 2022)